# FASCICULE DE BREVET EUROPEEN

(11) **EP 0 650 938 B1**
(45) Date de publication et mention de la délivrance du brevet: **29.12.1999**
(21) Numéro de dépôt: 94402431.4
(22) Date de dépôt: 27.10.1994
(51) Int. Cl.: C03C 17/34

(54) **Substrat transparent muni d'une couche de nitrure métallique**
Transparentes Substrat beschichtet mit einem Metallnitridfilm
Transparent substrate coated with a metallic nitride layer

(30) Priorité: 02.11.1993 FR 9313023
(43) Date de publication de la demande: 03.05.1995
(73) Titulaire: SAINT-GOBAIN VITRAGE, 92400 Courbevoie (FR)
(72) Inventeur: Boire, Philippe, F-75019 Paris (FR); Balian, Pierre, F-75015 Paris (FR)
(74) Mandataire: Renous Chan, Véronique

(56) Documents cités:
- EP-A- 0 530 676
- EP-A- 0 544 577
- WO-A-90/09883
- DATABASE WPI Week 9106, Derwent Publications Ltd., London, GB; AN 91-040589 & JP-A-2 307 844 (NIPPON SHEET GLASS KK) 21 Décembre 1990
- CHEMICAL ABSTRACTS, vol. 115, no. 4, 29 Juillet 1991, Columbus, Ohio, US; abstract no. 34179y, page 300 ; & JP-A-2 307 843 (ASAHI GLASS CO. LTD.) 21 Décembre 1990
- CHEMICAL ABSTRACTS, vol. 116, no. 16, 20 Avril 1992, Columbus, Ohio, US; abstract no. 157366k, page 347 ; & JP-A-3 275 533 (NIPPON SHEET GLASS CO. LTD.) 6 Décembre 1991
- CHEMICAL ABSTRACTS, vol. 114, no. 4, 28 Janvier 1991, Columbus, Ohio, US; abstract no. 28892p, page 298 ; & JP-A-2 157 141 (NIPPON SHEET GLASS CO. LTD.) 15 Juin 1990

## Description

L'invention concerne les substrats transparents, notamment en verre, qui sont munis d'une couche de nitrure métallique, tout particulièrement en vue de la fabrication de vitrages à propriété de protection vis-à-vis des rayonnements solaires.

En effet, des vitrages munis de ce type de couche permettent de réduire l'apport thermique venant des rayonnements du soleil, du fait que les couches de nitrure métallique, par exemple de nitrure de titane, peuvent les filtrer partiellement, par absorption et réflexion.

Différentes techniques existent pour déposer des couches de nitrure métallique sur des substrats, comme par exemple les techniques utilisant le vide du type pulvérisation cathodique assistée par champ magnétique, techniques efficaces mais coûteuses en appareillages et ne pouvant fonctionner en continu sur un ruban de verre float.

Existent aussi les techniques dites de pyrolyse, consistant à projeter sur le substrat porté à haute température des précurseurs azotés et des précurseurs métalliques, précurseurs qui, au contact l'un de l'autre, se décomposent sur le substrat en laissant une pellicule de nitrure métallique. Ces techniques sont plus simples de mise en oeuvre et, surtout, sont utilisables en continu sur le ruban de verre float.

Il est ainsi connu du brevet EP-B-0 128 169 un procédé de dépôt de couches de nitrure de titane TiN par pyrolyse en phase gazeuse, appelée aussi CVD (Chemical Vapor Deposition), à partir d'un précurseur de titane comme le tétrachlorure de titane et d'un précurseur azoté sous forme d'ammoniac. Cependant, si le dépôt d'une unique couche de nitrure confère au substrat des propriétés anti-solaires, en revanche il n'offre guère de souplesse en termes de choix de colorimétrie. En outre, la couche de nitrure, non protégée, risque de s'oxyder sur la ligne même de fabrication ou ultérieurement, lors d'un traitement thermique du substrat du type bombage, trempe ou recuit. Or une couche de nitrure partiellement oxydée voit ses propriétés et son aspect visuel significativement altérés.

C'est la raison pour laquelle le brevet EP-B-0 239 280 préconise de déposer sur la couche de nitrure une seconde couche destinée à la protéger et composée d'oxyde d'étain, de silicium ou d'aluminium. Cependant, le degré de résistance à l'oxydation ainsi acquis par la couche de nitrure dépend étroitement des caractéristiques intrinsèques de la couche protectrice, notamment du choix du métal formant l'oxyde ainsi que de l'épaisseur de celle-ci, caractéristiques qui vont également influer sur l'aspect optique, particulièrement en réflexion, du substrat porteur.

Le but de l'invention est alors d'optimiser la protection, tout particulièrement vis-à-vis de l'oxydation, d'une couche de nitrure métallique déposée sur un substrat transparent, sans que cette optimisation ne s'opère au détriment de son aspect optique.

L'invention a pour objet un substrat transparent, notamment en verre, surmonté d'une couche de nitrure métallique destinée à filtrer les rayonnements solaires et dont le métal est majoritairement du titane, ladite couche de nitrure étant elle-même surmontée d'une couche à base d'oxyde métallique. Cette couche à base d'oxyde métallique utilise un métal choisi majoritairement en aluminium, zirconium ou titane, et elle est protectrice vis-à-vis de l'oxydation à haute température. Elle est elle-même surmontée d'une couche anti-reflets. L'épaisseur géométrique de la couche protectrice est de 10 à 30 nm et celle de la couche anti-reflets de 40 à 70 nm.

Cette couche d'oxyde métallique est donc destinée à protéger la couche de nitrure de tout phénomène d'oxydation, notamment à haute température lors de traitements thermiques du substrat porteur du type recuit, bombage, trempe.

La couche de nitrure est ainsi efficacement protégée de l'oxydation qui altérerait ses propriétés à la fois sur le plan optique et sur le plan énergétique.

Les auteurs de l'invention ont en effet tenté de répertorier les raisons pour lesquelles une couche de nitrure, même surmontée d'une couche protectrice, était susceptible de s'oxyder à haute température. Ces raisons sont multiples. L'une d'elles résulte vraisemblablement des caractéristiques intrinsèques de la couche protectrice et notamment de son degré de densité ou au contraire de porosité. En effet, une couche poreuse facilitera la diffusion d'oxygène de l'atmosphère extérieure à travers son épaisseur jusqu'à la couche de nitrure sous-jacente. Et si l'on tente de contrebalancer une certaine porosité par une augmentation de l'épaisseur de la couche protectrice, on risque de détériorer significativement l'aspect visuel, notamment en réflexion, du substrat porteur.

Déposer, conformément à l'invention, la couche protectrice d'oxyde de préférence par pyrolyse, c'est-à-dire une technique qui s'effectue à haute température (en général de 500 à 650 ou 7000°C), garantit à cette dernière une forte densité et, en outre, une excellente adhérence à la couche sous-jacente.

La diffusion d'oxygène à travers ce type de couche non poreuse s'en trouve donc extrêmement réduite, même si la couche est relativement mince.

Une autre raison de voir la couche de nitrure s'oxyder provient de la couche protectrice elle-même : l'oxyde dont elle est constituée peut présenter une tendance plus ou moins importante, à haute température, à réagir chimiquement avec le nitrure à l'interface entre les deux couches, ce qui peut conduire à transformer, au voisinage de cette interface, l'oxyde en oxyde sous-stoechiométrique en oxygène et le nitrure en nitrure partiellement oxydé TiNₓO_{y}.

Or, si l'on choisit le métal de l'oxyde de manière à ce qu'il présente une valeur de delta G° à haute température, notamment vers 600°C, qui soit inférieure ou égale à celle du métal du nitrure, on confère à l'oxyde une forte inertie chimique vis-à-vis du nitrure et on freine l'oxydation du nitrure.

La solution selon l'invention concilie ainsi esthétique et intégrité de la couche fonctionnelle en nitrure.

Le métal de la couche de niture est majoritairement du titane, sachant d'une part que les couches de TiN offrent une protection efficace vis-à-vis des rayonnements solaires et que d'autre part on peut les déposer aisément notamment par une technique de pyrolyse en phase gazeuse. Cette technique, applicable en continu sur le ruban de verre float, utilise notamment comme précurseurs un halogénure de titane et un dérivé azoté tel que de l'ammoniac et/ou une amine, suivant en cela par exemple l'enseignement de la demande de brevet français FR-A-2708924, correspondant à la demande de brevet européen EP-A-638527.

Pour que cette couche de nitrure diminue suffisamment la transmission énergétique du substrat porteur, notamment en verre, sans que ce dernier perde de manière trop significative son caractère de transparence, son épaisseur géométrique doit être de préférence d'au plus 80 nanomètres, notamment comprise entre 5 et 80 nanomètres, particulièrement entre 10 et 60 et par exemple entre 15 et 35 nanomètres.

De préférence, selon l'invention, le métal de la couche d'oxyde métallique est majoritairement du titane également. Il peut ainsi s'agir de TiO₂ (mais on peut également envisager d'utiliser de l'oxyde d'aluminium ou de zirconium pour les raisons développées ultérieurement).

Son épaisseur géométrique est comprise avantageusement entre 10 et 30 nm, ce qui est suffisant pour protéger la couche de nitrure de toute oxydation, et, accessoirement, de toute agression chimique ou mécanique.

Il est à noter qu'un mode de réalisation préféré de l'invention consiste ainsi à prévoir un empilement substrat/TiN/TiO₂. En effet, en choisissant un métal identique pour former la couche de nitrure puis celle d'oxyde protecteur, la compatibilité des deux couches est excellente, notamment en termes d'adhérence mutuelle. Par ailleurs, si même il devait s'avérer qu'une proportion minime d'oxygène passait de la couche d'oxyde à la couche de nitrure en l'oxydant superficiellement, cela ne tendrait qu'à faire disparaître du TiO₂ dans la couche d'oxyde pour en reformer aussitôt à la surface de la couche de nitrure, réaction quantitativement négligeable, non décelable et dont le bilan chimique est en fait globalement nul.

Cependant, si l'on utilise comme couche de nitrure une couche de TiN, sachant que le titane a une valeur de delta G° d'oxydation d'environ - 190 kcal/mol (O₂) à 600°C, le métal de la couche d'oxyde peut être choisi également avantageusement, comme précédemment mentionné, parmi le zirconium et l'aluminium qui ont une valeur de delta G° d'au plus - 190kcal/mol (O₂) à cette température. La valeur de delta G° à 600°C du zirconium est ainsi d'environ - 221 kcal/mol (O₂) et celle de l'aluminium est très voisine de celle du zirconium.

Il reste que l'un des intérêts de choisir l'oxyde de titane réside dans le fait qu'il est facile de déposer une telle couche par une technique de pyrolyse, de manière connue. Ainsi, on peut utiliser une technique de pyrolyse par voie solide, avec des précurseurs se présentant sous forme pulvérulente comme l'acétylacétonate de titane, un tétra-alkyltitanate, ou le Ti(OCH₃)₄ comme décrit dans le brevet EP-B-75516. On peut aussi utiliser une technique de pyrolyse par voie liquide, avec des précurseurs dissouts ou dilués dans des solvants organiques, précurseurs pouvant être de l'acétylacétonate de titane et/ou de l'isopropylate de titane ou un alcoolate comme le tétraoctylèneglycol de titane, tous connus du brevet FR-B-2 664 259. Reste aussi la pyrolyse en phase gazeuse à partir d'halogénures du type TiCl₄ et d'une source d'oxygène comme H₂O, CO₂, de l'air ou un alcool du type éthanol. On peut également déposer une couche d'oxyde de zirconium ZrO₂ par pyrolyse, notamment par voie solide avec comme précurseur pulvérulent de l'acétylacétonate de zirconium ou par voie liquide, ou en phase gazeuse. De même, l'oxyde d'aluminium peut être déposé par pyrolyse liquide ou par voie solide à l'aide de précurseurs ayant notamment une fonction alcoolate ou β-dicétone, et par exemple du type triisopropylate d'aluminium, tri-n-butylate d'aluminium, tri-terbutylate d'aluminium, tri-éthylate d'aluminium ou acétylacétonate d'aluminium, ou en phase gazeuse.

On peut en outre prévoir avantageusement une troisième couche dans l'empilement conforme à l'invention, troisième couche disposée entre substrat et couche de nitrure et à base de matériau diélectrique. Son indice de réfraction est de préférence compris entre 1,4 et 2, tout particulièrement entre 1,6 et 1,9. Son épaisseur géométrique est de préférence inférieure à 100 nanomètres, notamment de l'ordre de 40 à 90 nanomètres. Le matériau diélectrique préféré pour cette troisième couche est à base de SiO₂ et/ou SiOₓC_{y}, type de matériau que l'on peut déposer, de manière connue, par exemple par pyrolyse en phase gazeuse de précurseurs siliciés.

Ce que les auteurs ont en effet découvert, c'est que la présence de cette couche intermédiaire entre substrat et couche de nitrure pourrait renforcer significativement la résistance à l'oxydation de cette dernière. L'explication avancée serait que des traitements thermiques subis par le substrat muni de la couche de nitrure, s'ils sont suffisamment longs et/ou atteignent des températures suffisamment élevées, conduiraient à favoriser la migration d'ions oxygène du substrat porteur en verre vers la couche de nitrure, couche de nitrure qui aurait ainsi tendance à s'oxyder même protégée par une sur-couche d'oxyde. Une couche en matériau diélectrique intercalée entre le substrat et la couche de nitrure bloquerait efficacement cette diffusion et supprimerait ainsi une autre raison de voir le nitrure s'oxyder.

C'est un diélectrique à base de SiOₓC_{y} ou SiO₂ qui s'est avéré le matériau le meilleur pour jouer ce rôle de "barrière" aux ions oxygène, pendant ces traitements thermiques ultérieurs. Mais ce type de couche peut également se révéler utile pour jouer ce rôle de barrière lors du dépôt même de la couche de nitrure, notamment lorsqu'il s'effectue par pyrolyse, tout particulièrement sur un ruban de verre float. Cette couche intermédiaire peut également jouer un rôle optique et notamment permettre d'ajuster l'aspect en réflexion du substrat, en conjugaison avec la "sur-couche" protectrice d'oxyde.

On constate ainsi que pour protéger de manière la plus sûre la couche de nitrure de l'oxydation, quel que soit le type de traitement thermique envisagé pour le substrat, mieux vaut prévoir non seulement la sur-couche d'oxyde dense et inerte chimiquement telle que précédemment décrite mais également une "sous-couche" faisant fonction de barrière vis-à-vis du substrat. Tout dépend alors de la nature exacte du traitement thermique envisagé et du degré de résistance à l'oxydation que l'on souhaite atteindre pour la couche de nitrure, cette 〈〈 sous-couche 〉〉 restant optionnelle.

On peut également envisager de surmonter la couche protectrice d'oxyde métallique d'une couche dite " anti-reflet ", d'indice de réfraction inférieur à 2 et notamment compris entre 1,6 et 1,9. On la choisit avantageusement à base de SiO₂ ou de SiOₓC_{y}. A fonction essentiellement optique, cette couche est de préférence d'une épaisseur géométrique comprise entre 40 et 70 nm. Cette couche à bas indice de réfraction diminue ainsi avantageusement la valeur de réflexion lumineuse du substrat porteur et s'avère efficace, en particulier quand la couche sous-jacente d'oxyde métallique présente un indice de réfraction assez élevé, par exemple supérieur à 2,2 comme c est le cas pour l'oxyde de titane. On peut la déposer notamment par pyrolyse en phase gazeuse.

Un mode de réalisation préféré de l'invention consiste à déposer sur la couche de nitrure une première couche à base de TiO₂ puis une seconde couche à base de SiOₓC_{y}, avec avantageusement la somme des épaisseurs de ces deux dernières couches égale à environ 40 à 80 nanomètres, notamment 50 à 75 nanomètres, dont de préférence 10 nanomètres de TiO₂. On concilie ainsi bombabilité/trempabilité et esthétisme : l'épaisseur de TiO₂ protecteur est suffisante, d'au moins 10 nanomètres, pour protéger au mieux le nitrure de l'oxydation, et le choix de la couche en SiO₂ d'épaisseur et d'indice appropriés permet de " gommer " plus ou moins l'aspect brillant en réflexion de l'empilement dû à l'utilisation d'un oxyde à haut indice comme l'oxyde de titane.

En termes de procédé de fabrication, le plus simple est de prévoir le dépôt de l'ensemble des couches par une technique de pyrolyse. On peut alors effectuer les dépôts successivement, en continu, sur le ruban de verre d'une installation float : la " sous-couche " barrière optionnelle et la couche de nitrure peuvent par exemple être déposées par pyrolyse en phase gazeuse dans l 'enceinte du bain float, la surcouche d'oxyde du type TiO₂ peut être déposée soit également par pyrolyse en phase gazeuse dans l'enceinte du bain float, soit par pyrolyse en phase solide ou liquide entre l'enceinte du bain float et l'étenderie. Enfin, la deuxième surcouche du type SiOₓC_{y} peut être déposée par pyrolyse en phase gazeuse, notamment dans l'étenderie.

Le substrat transparent est de préférence du type verrier afin de supporter les températures imposées par des dépôts par pyrolyse. On peut choisir des substrats en verre silico-sodo-calcique clair usuel, notamment celui commercialisé par la société SAINT-GOBAIN VITRAGE sous le dénomination commerciale PLANILUX. Mais on peut également préférer des substrats verriers qui présentent déjà des propriétés thermiques intrinsèques, et qui notamment sont capables de diminuer la transmission énergétique du vitrage qui les incorpore, par exemple par ajouts de composés particuliers comme des oxydes colorants. On peut ainsi citer la gamme de substrats verriers colorés vendus par la société SAINT-GOBAIN VITRAGE sous la dénomination commerciale PARSOL, présentant des teintes et propriétés thermiques variées. On peut aussi citer les verres décrits dans les demandes de brevet WO-93/07095 ou dans la demande de brevet français FR-A-2699526 au nom de SAINT-GOBAIN VITRAGE INTERNATIONAL. Utiliser des substrats verriers possédant déjà une certain fonctionnalité est très avantageux, car on peut ainsi cumuler de manière synergique les effets aussi bien esthétiques que thermiques du substrat d'une part, de l'empilement de couches minces d'autre part.

Les substrats recouverts selon l'invention sont avantageusement incorporés dans des vitrages de protection solaire, notamment dans des vitrages monolithiques, ou encore multiples du type double-vitrage, notamment destinés au bâtiment. Dans ce cas, les substrats selon l'invention sont placés dans le double-vitrage de préférence de manière à ce que l'empilement de couches minces se trouve en face 2 une fois le vitrage monté. (Les faces des vitrages multiples sont usuellement numérotées en commençant à partir de la face la plus extérieure par rapport au local qu'ils équipent). On combine ainsi l'effet d'isolation thermique de la lame de gaz intercalaire et l'effet de filtrage des rayonnements thermiques du substrat recouvert de l'empilement de couches minces.

Les double-vitrages ainsi constitués peuvent présenter une transmission lumineuse T_{L} inférieure ou égale à 65% et un rapport T_{L}/T_{E} de la transmission lumineuse sur la transmission énergétique supérieur à 1, notamment compris entre 1,2 et 1,4, et par exemple de l'ordre de 1,3. En termes de performances, ces vitrages constituent donc un bon " filtre solaire " tout en gardant un niveau de transparence qui les rend particulièrement aptes à une utilisation dans le bâtiment. Le rapport T_{L}/T_{E} assez élevé prouve qu'ils sont sélectifs. Les vitrages présentent aussi un facteur solaire qui peut être inférieur à 0,5, ce qui prouve leur effet " anti-solaire " très significatif. (On rappelle que le facteur solaire d'un vitrage est le rapport entre l'énergie totale entrant dans le local à travers ledit vitrage et l'énergie solaire incidente).

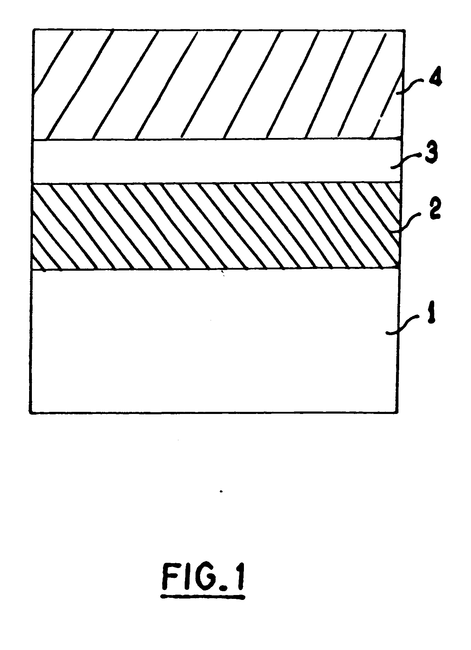

Les détails et caractéristiques avantageuses de l'invention ressortent de la description détaillée suivante d'exemples de réalisation non limitatifs, à l'aide de la figure 1 ci-jointe qui montre en coupe un substrat 1 revêtu de trois couches 2, 3, 4. (Les proportions entre les épaisseurs des différents matériaux impliqués n'ont pas été respectés dans la figure afin d'en faciliter la lecture).

### EXEMPLES 1 à 4 COMPARATIFS :

Les exemples 1 à 3 comparatifs suivants concernent le dépôt sur un substrat 1 de verre clair silico-sodo-calcique du type Planilux de 6 millimètres d'épaisseur d'un empilement de couches minces comprenant successivement une couche 2 de SiOₓC_{y}, une couche 3 de nitrure de titane TiN, et une couche 4 d'oxyde de titane TiO₂. L'exemple 4 est similaire aux précédents, mais dépourvu de la couche 2 de SiOₓC_{y}.

Les dépôts ont été effectués de la manière suivante :
- le dépôt de la couche 2 en SiOₓC_{y}, lorsqu'elle est présente, est fait par pyrolyse en phase gazeuse de SiH₄, de manière connue, en suivant l'enseignement de la demande de brevet EP-A-0 518 755,
- le dépôt de la couche 3 en TiN est fait par pyrolyse en phase gazeuse de TiCl₄ et d'ammoniac, suivant l'enseignement du brevet EP-B-0 128 169 ou de TiCl₄ et d'amine suivant l'enseignement de la demande de brevet français FR-A-2708924.
le dépôt de la couche 4 en TiO₂ est fait par pyrolyse en phase liquide d'un mélange de chélate de titane (acétylacétonate et isopropylate de titane) et d'alcoolate de titane (tétraoctylèneglycol de titane) dans de l'acétate d'éthyl, de manière à ce que le rapport des concentrations en chélate et alcoolate exprimées en poids de titane soit de 2/1, précurseurs et proportion connus du brevet FR-B-2 664 259.

Le tableau 1 ci-dessous regroupe les valeurs d'épaisseur e, en nanomètres, des couches 2 à 4 pour chacun des quatre exemples, et précise, dans le cas de la couche 2 en SiOₓC_{y}, son indice de réfraction noté i.r.

**TABLEAU 1**

| | **EXEMPLE 1** | **EXEMPLE 2** | **EXEMPLE 3** | **EXEMPLE 4** |
|---|---|---|---|---|
| **Couche 2** | | | | |
| **e** | **50** | **50** | **45** | **-** |
| **i.r** | **1,9** | **1,9** | **1,7** | |

| **Couche 3** | | | | |
|---|---|---|---|---|
| **e** | **23** | **30** | **23** | **23** |

| **Couche 4** | | | | |
|---|---|---|---|---|
| **e** | **30** | **30** | **85** | **85** |

Le tableau 2 ci-dessous regroupe, pour les exemples 1 à 3, les valeurs spectrophotométriques suivantes : TL la transmission lumineuse et T_{E} la transmission énergétique en pourcentage, le rapport T_{L}/T_{E} sans dimension appelé sélectivité, R_{L} la réflexion lumineuse extérieure en pourcentage. Les valeurs ont été obtenues sur un double-vitrage constitué du substrat recouvert des trois couches assemblé à un autre substrat identique mais dépourvu de revêtement par l'intermédiaire d'une lame de gaz de 12 millimètres d'épaisseur, les couches étant en face 2. Les valeurs sont données en référence à l'illuminant D₆₅.

**TABLEAU 2**

| | **EXEMPLE 1** | **EXEMPLE 2** | **EXEMPLE 3** |
|---|---|---|---|
| **T**_{**L**} | **63** | **60** | **46** |
| **T**_{**E**} | **47** | **43** | **41** |
| **T**_{**L**}**/T**_{**E**} | **1,3** | **1,4** | **1,1** |
| **R**_{**L**} | **13** | **13** | **28** |

Par ailleurs, les substrats recouverts selon ces exemples, avant d'être assemblés en double-vitrages, ont été soumis à un traitement thermique à plus de 500°C, traitement simulant une trempe ou un bombage. Ce type de traitement n'a pas modifié visuellement de manière détectable l'aspect des substrats, et la couche de TiN a gardé inchangées ses propriétés de réflexion/absorption des rayonnements solaires.

Avant assemblage, le substrat selon l'exemple 4 a été soumis à deux types de test permettant d'évaluer la durabilité mécanique et chimique de l'empilement de couches minces qui les recouvrent :

Le test dit "Taber" est le test mécanique permettant d'apprécier la résistance à l'abrasion de la couche. Il est effectué à l'aide de meules faites de poudre abrasive noyée dans un élastomère. La machine est fabriquée par la Société Taber Instrument Corporation aux Etats-Unis. Il s'agit du modèle 174, "Standard Abrasion Tester", les meules sont du type CS10F chargées de 500 grammes. La couche est soumise à 2000 rotations.

Le test chimique dit "test HCl" consiste à plonger le substrat revêtu dans une solution aqueuse d'HCl d'une concentration 1 mole/litre et chauffée à reflux à 100°C pendant 1 heure.

Dans les deux tests, on estime le degré de détérioration des couches d'une part par la différence T_{L}-T_{LO} entre les valeurs de transmission lumineuse T_{L} obtenues en fin de test et celles qui sont initiales ; d'autre part par la différence (H_{L} - H_{LO}) entre les valeurs de fraction de lumière diffusée obtenues en fin de test et celles qui sont initiales.

Ces valeurs, en pourcentage, sont regroupées dans le tableau ci-dessous :

**TABLEAU 3**

| **Exemple 4** | **T**_{**L**} **- T**_{**LO**} | **H**_{**L**} **- H**_{**LO**} |
|---|---|---|
| **Test Taber** | **8 %** | **< 2,5 %** |
| **Test Hcl** | **2 %** | **0,75 %** |

De toutes ces données peuvent être tirées les conclusions suivantes :

La surcouche 4 d'oxyde de titane s'avère très efficace pour protéger la couche de nitrure 3 sous-jacente, même si elle a une épaisseur relativement peu importante. Choisir, pour former l'oxyde, un métal dont la valeur de delta G° à 600°C, est égale à celle du métal du nitrure (puisqu'il s'agit ici du même métal : le titane) combine deux avantages : l'oxyde présente une forte inertie chimique par rapport au nitrure, ce qui réduit très fortement tout risque d'oxydation du nitrure par de l'oxygène provenant dudit oxyde. En outre, même si une proportion très limitée d'oxygène conduisait à oxyder en surface la couche de TiN, le fait que le même métal soit choisi pour les deux couches rendrait cette oxydation indétectable et non préjudiciable, le TiN éventuellement oxydé en TiO₂ à l'interface entre les deux couches se confondant avec la couche de TiO₂.

Par ailleurs, les bons résultats obtenus aux tests de durabilité mécanique et chimique permettent de prouver indirectement tout à la fois la forte densité de la sur-couche 4 et sa forte adhérence à la couche de nitrure 3 sous-jacente, densité et adhérence obtenues grâce à la technique de dépôt utilisée, la pyrolyse à haute température. Le caractère dense et non poreux de la surcouche d'oxyde empêche ainsi l'oxygène de l'atmosphère extérieure de diffuser à travers la surcouche d'oxyde pour atteindre la couche de nitrure 3 et de ce fait l'oxyder.

Le mieux est de déposer la surcouche d'oxyde 4 consécutivement au dépôt de la couche de nitrure 3, de manière à ce que la couche de nitrure 3 n'ait pas le temps de risquer de s'oxyder en surface avant d'être recouverte, et ceci d'autant plus quand la couche de nitrure est déposée par pyrolyse sur un ruban de verre float très chaud, qui, au sortir de l'enceinte du bain float, se retrouve au contact avec l'air ambiant.

On peut aussi noter des exemples 1 et 2 que le choix de l'épaisseur de la couche de nitrure 3 permet de moduler les valeurs de T_{L}, donc de moduler le degré de transparence du vitrage, mais que le rapport T_{L}/T_{E} reste à peu près constant, de l'ordre de 1,3 à 1,4. Cela signifie que l'empilement de couches selon l'invention permet d'obtenir des vitrages sélectifs, c'est-à-dire présentant des rapports T_{L}/T_{E} relativement élevés, et ceci quelle que soit la valeur de T_{L} souhaitée.

Un dernier point, déduit de la comparaison des exemples 1 et 3, est que l'utilisation combinée d'une sous-couche 2 et d'une sur-couche 4 de part et d'autre de la couche fonctionnelle 3 en nitrure permet d'ajuster l'aspect optique du vitrage. Ainsi, selon l'exemple 1, le vitrage a une valeur de R_{L} inférieure à 15 %, et présente donc un aspect en réflexion peu réfléchissant, non brillant qui est apprécié actuellement sur le plan esthétique. Mais on peut choisir aussi, selon l'exemple 3, d'avoir un vitrage à R_{L} plus élevée, en utilisant une sur-couche 4 d'oxyde significativement plus épaisse. La présence de la sous-couche 2 bloque en outre la migration d'ions oxygène du substrat 1 vers la couche de nitrure 3 qui pourrait sinon se produire, notamment quand le traitement thermique envisagé, du type bombage ou trempe, s'opère dans des conditions particulièrement propices à l'oxydation du nitrure.

### EXEMPLES 5 à 8

Ces exemples concernent le dépôt sur des substrats de verre clair de mêmes caractéristiques que pour les exemples 1 à 3 précédents, mais recouverts d'un empilement un peu différent supprimant la sous-couche 2 en SiOₓC_{y} et ajoutant par contre une surcouche non représentée sur la figure, à base de SiOC également et surmontant la couche 4 en TiO₂. On a donc cette fois un empilement du type :
verre/TiN/TiO₂/SiOₓC_{y}

Les couches de TiN et de TiO₂ sont fabriquées comme précédemment. La surcouche en SiOₓC_{y} est obtenue soit par pyrolyse en phase gazeuse à partir de SiH₄ et d'éthylène comme connu de la demande de brevet EP-A-518 755, soit à partir de précurseurs organo-siliciés (du type tétraéthylorthosilicate, diéthylsilane, hexaméthyldisilane, hexaméthyldisiloxane, octaméthylcyclotétrasiloxane, tétraméthylcyclotétrasiloxane, hexaméthyldisilazane ou tétraméthylsilane),associés à un gaz oxydant du type O₂, O₃, vapeur d'eau, N₂O... L'intérêt d'utiliser un précurseur organo-silicié plutôt que du SiH₄ réside notamment dans le fait qu'il présente en général une température de décomposition un peu moins élevée que SiH₄, par exemple autour de 480°C pour le tétraéthylorthosilicate TEOS. Dans le cas d'un dépôt sur ligne float, on peut ainsi procéder au dépôt de cette seconde surcouche dans l'étenderie, le ruban de verre float présentant alors la température adéquate.

On règle les conditions de dépôt de cette couche de manière connue afin qu'elle ait un indice de réfraction d'environ 1,7.

Le tableau 4 ci-dessous regroupe pour chacun des exemples 5 à 8 les valeurs d'épaisseur e en nanomètres de chacune des couches en présence.

**Tableau 4**

| | **e[TiN (3)]** | **e[TiO2 (4)]** | **e[surcouche SiOxCy]** |
|---|---|---|---|
| Exemple 5 | 15 | 10 | 60 |
| Exemple 6 | 15 | 15 | 55 |
| Exemple 7 | 15 | 20 | 50 |
| Exemple 8 | 15 | 30 | 40 |

On a soumis ces substrats à un traitement thermique à 500°C simulant un bombage ou une trempe. Là encore, aucune modification significative n'a été observée sur le plan visuel ou thermique, ce qui confirme qu'une surcouche de TiO₂ ne faisant même que 10 nm (exemple 5) peut suffire à protéger au mieux le nitrure de l'oxydation, grâce à son effet 〈〈 bouclier 〉〉 efficace dû notamment à sa forte densité.

Les substrats sont ensuite montés en double-vitrages dans les mêmes conditions que pour les exemples 1 à 3.

Le tableau 5 ci-dessous regroupe pour ces 4 double-vitrages, les valeurs photométriques suivantes : T_{L}, T_{E}, le rapport T_{L}/T_{E}, R_{L} (mêmes significations que précédemment). Il mentionne également les valeurs de facteur solaire FS sans dimension, la longueur d'onde dominante η d(t) et la pureté de couleur pₑ(t) en transmission. Il mentionne également la longueur d'onde dominante η d(R) et la pureté de couleur pₑ(R) de la réflexion extérieure R_{L}.

**Tableau 5**

| | **EXEMPLE 5** | **EXEMPLE 6** | **EXEMPLE 7** | **EXEMPLE 8** |
|---|---|---|---|---|
| FS | 0,46 | - | 0,45 | - |
| T_{E} | 37 | 37 | 38 | 36 |
| T_{L} | 52 | 51 | 50 | 49 |
| T_{L}/T_{E} | 1,40 | 1,38 | 1,32 | 1,36 |
| η d(t) | 499 | 498 | 498 | 507 |
| pₑ(t) | 1,7 | 1,7 | 1,6 | 1,0 |
| R_{L} | 24 | 26 | 27 | 32 |
| η d(R) | 497 | 498 | 498 | 504 |
| pₑ(Rₑ) | 3,5 | 3,3 | 3,2 | 2,4 |

Tous ces double-vitrages ont donc à la fois un facteur solaire inférieur à 0,5 et une sélectivité supérieure à 1,30. Ils offrent donc une bonne protection des rayonnements thermiques provenant du soleil sans sacrifier de manière trop importante à la transparence.

On peut aussi noter qu'en transmission, la couleur est dans les bleus-verts, mais de manière extrêmement atténuée puisqu'avec une pureté qui reste inférieure à 2.

De même, en réflexion extérieure, on voit que les vitrages ont une couleur dans les bleus tout-à-fait esthétique et également très faible et atténuée, puisque sa pureté reste inférieure à 4. On observe aussi que, dans tous ces exemples, on a gardé constante la valeur de la somme des épaisseurs de la surcouche de TiO₂ et de la seconde surcouche en SiOC, valeur d'environ 70 nm. On constate alors que plus l'épaisseur de la couche de TiO₂ augmente par rapport à celle de la couche en SiOC, et plus la valeur de R_{L} tend à augmenter. En modulant ainsi les épaisseurs de ces deux couches, on peut ajuster l'aspect plus ou moins réfléchissant des vitrages vus de l'extérieur, sachant que 10 nanomètres de TiO₂ peuvent suffire à assurer par ailleurs la protection du nitrure sous-jacent si la couche est déposée dans des conditions permettant d'obtenir une forte densité et une forte adhérence de celle-ci.

### EXEMPLES 9 à 18

Ces exemples concernent le dépôt d'un empilement à trois couches TiN/TiO₂/SiOₓC_{y} obtenu comme dans les exemples 5 à 8, mais sur quatre types de substrats verriers qui en eux-mêmes présentent une transmission énergétique réduite.

Les trois premiers sont commercialisés par la société SAINT-GOBAIN VITRAGE sous la dénomination PARSOL bronze, PARSOL gris, PARSOL vert. Le quatrième est un verre teinté en bleu, comme celui décrit dans la demande de brevet WO-93/07095 précitée.

On indique tout d'abord dans le tableau 6 ci-dessous les caractéristiques de ces 4 verres monolithiques, d'épaisseur 6 mm, en comparaison avec le verre 〈〈 clair〉〉 dit Planilux utilisé dans les exemples précédentes.

**Tableau 6**

| **VERRE NU** | **CLAIR** | **BRONZE** | **GRIS** | **VERT** | **BLEU** |
|---|---|---|---|---|---|
| FS | 0.86 | 0.61 | 0.58 | 0.60 | 0.56 |
| T_{E} | 83 | 50 | 45 | 48 | 42 |
| T_{L} | 90 | 49 | 41 | 72 | 76 |
| T_{L}/TE | 1.08 | 0.99 | 0.92 | 1.49 | 1.81 |
| η d(t) | 509 | 584 | 473 | 494 | 491 |
| pₑ (t) | 0.1 | 9 | 2 | 5 | 7 |
| R_{L} | 8 | 5 | 5 | 7 | 7 |
| η d(R) | 509 | 584 | 473 | 494 | 490 |
| Pₑ 5R) | 0.1 | 3 | 1 | 3 | 5 |

Sur chacun de ces 5 substrats ont été déposés deux empilements A et B :
- **Empilement A :** 15 nm de TiN puis 10 nm de TiO₂ puis 60 nm de SiOC
- **Empilement B :** 5 nm de TiN puis 10 nm de TiO₂ puis 60 nm de SiOC.

Les résultats photométriques concernant les substrats recouverts de l'empilement A sont regroupés dans le tableau 7 ci-dessous, en indiquant sous chaque numéro d'exemple le type de verre concerné :

**Tableau 7**

| | **EXEMPLE 9 〈〈 clair 〉〉** | **EXEMPLE 10 〈〈 bronze 〉〉** | **EXEMPLE 11 〈〈 gris 〉〉** | **EXEMPLE 12 〈〈 vert 〉〉** | **EXEMPLE 13 〈〈 bleu 〉〉** |
|---|---|---|---|---|---|
| FS | 0.55 | 0.43 | 0.42 | 0.44 | 0.92 |
| T_{E} | 45 | 27 | 24 | 28 | 49 |
| T_{L} | 58 | 32 | 27 | 46 | 25 |
| T_{L}/TE | 1.29 | 1.19 | 1.12 | 1.69 | 1.93 |
| η d(t) | 498 | 582 | 481 | 494 | 491 |
| pₑ (t) | 1 | 8 | 3 | 6 | 8 |
| R_{L} | 21 | 9 | 8 | 15.1 | 16.4 |
| η d(R) | 497 | 577 | 486 | 494 | 491 |
| Pₑ (R) | 3 | 8 | 3 | 9 | 12 |

Les résultats photométriques concernant les substrats recouverts de l'empilement B, en vitrages monolithiques, sont regroupés dans le tableau 8 suivant, avec les mêmes conventions que précédemment.

**Tableau 8**

| | **EXEMPLE 14 〈〈 clair 〉〉** | **EXEMPLE 15 〈〈 bronze 〉〉** | **EXEMPLE 16 〈〈 gris 〉〉** | **EXEMPLE 17 〈〈 vert 〉〉** | **EXEMPLE 18 〈〈 bleu 〉〉** |
|---|---|---|---|---|---|
| FS | 0.69 | 0.51 | 0.49 | 0.51 | 0.48 |
| T_{E} | 61 | 37 | 33 | 36 | 61 |
| T_{L} | 72 | 40 | 33 | 58 | 33 |
| T_{L}/TE | 1.17 | 1.08 | 1.01 | 1.59 | 1.87 |
| η d(t) | 500 | 583 | 478 | 494 | 491 |
| pₑ (t) | 1 | 8 | 2 | 5 | 8 |
| R_{L} | 16 | 8 | 7 | 12 | 13 |
| η d(R) | 501 | 577 | 489 | 495 | 492 |
| Pₑ (R) | 3 | 7 | 2 | 8 | 11 |

On peut déduire de cette dernière série d'exemples plusieurs remarques : On peut noter d'abord que la neutralité de la coloration en transmission de l'empilement de couches minces selon l'invention permet de conserver largement au substrat verrier sa couleur originelle en transmission. En réflexion, par contre, l'empilement de couches minces peut modifier légèrement l'aspect du substrat verrier nu, en obtenant des effets de combinaison de couleurs qui peuvent s'avérer tout-à-fait esthétiques et originales.

On peut noter en outre que les effets de filtrage du rayonnement solaire dus d'une part aux substrats eux-mêmes, d'autre part aux couches minces, se combinent de manière très avantageuse : on peut ainsi obtenir de nouveaux 〈〈 compromis 〉〉 entre la transmission lumineuse et la transmission énergétique et ainsi mieux ajuster les performances des vitrages en fonction des besoins, en diversifiant la gamme des vitrages dits 〈〈 de contrôle solaire 〉〉, en ayant la possibilité de faire varier à la fois le type de verre du substrat et l'épaisseur de la couche de nitrure. On voit, de la comparaison des tableaux 7 et 8 que, à substrats identiques, l'épaisseur du TiN permet de 〈〈 régler 〉〉 le niveau de T_{L} donc de transparence requis, là encore afin de répondre aux besoins, et notamment afin de prendre en compte si le substrat sera utilisé tel quel en tant que vitrage monolithique ou s'il est destiné à faire partie d'un vitrage multiple du type double-vitrage.

En conclusion, on peut donc moduler à la fois les performances anti-solaires, l'aspect visuel et la résistance à l'oxydation du vitrage en modulant le nombre et les épaisseurs des couches de l'empilement dans des gammes données et le type de substrat, ce qui permet d'adapter le vitrage aux besoins du marché.

La mise en oeuvre de la fabrication d'un tel empilement sur une ligne de float ne pose pas de problème, les deux premiers dépôts des couches 2 d'oxyde ou d'oxycarbure et 3 de nitrure s'effectuant par exemple par pyrolyse en phase gazeuse dans la partie aval de l'enceinte du bain float, le dépôt de la surcouche d'oxyde 4 de TiO₂ s'effectuant par pyrolyse liquide ou solide entre l'enceinte de bain float et l'étenderie par exemple, ou par pyrolyse gazeuse juste avant la sortie du ruban de verre de l'enceinte du bain float, et celui de la seconde surcouche par pyrolyse en phase gazeuse dans l'étenderie.

L'empilement selon l'invention permet donc de protéger au mieux la couche fonctionnelle de nitrure métallique, tout en étant faisable industriellement. En l'associant à des substrats eux-mêmes filtrants, on peut optimiser et diversifier les vitrages et leurs performances.

## Revendications

1. Substrat transparent (1), notamment en verre, surmonté d'une couche de nitrure métallique (3) destinée à filtrer les rayonnements solaires et dont le métal est majoritairement du titane, ladite couche de nitrure métallique étant surmontée d'une couche (4), à base d'oxyde métallique, **caractérisé en ce que** la couche (4) à base d'oxyde métallique protectrice vis-à-vis de l'oxydation à haute température a le métal choisi majoritairement en aluminium, zirconium ou en titane, **en ce qu**'elle est surmontée d'une couche anti-reflets **et en en ce que** l'épaisseur géométrique de la couche (4) protectrice est de 10 à 30 nm et celle de la couche anti-reflets comprise entre 40 et 70 nm.

2. Substrat (1) selon la revendication 1, **caractérisé en ce que la** couche (3) de nitrure métallique a une épaisseur géométrique comprise entre 5 et 80 nanomètres, de préférence entre 10 et 60, notamment entre 15 et 35 nanomètres.

3. Substrat (1) selon l'une des revendications précédentes, **caractérisé en ce qu**'il est muni d'une couche (2) en matériau diélectrique disposée entre le substrat (1) et la couche (3) en nitrure métallique.

4. substrat (1) selon la revendication 3, **caractérisé en ce que** la couche (2) est en matériau diélectrique d'indice de réfraction compris entre 1,5 et 2, de préférence 1,6 et 1,9.

5. Substrat (1) selon la revendication 3 ou 4, **caractérisé en ce que** la couche (2) a une épaisseur géométrique inférieure à 100 nanomètres, notamment d'environ 40 à 90 nanomètres.

6. Substrat (1) selon la revendication 3 ou 4, **caractérisé en ce** que la couche (2) en matériau diélectrique est à base de SiO₂ et/ou SiOₓC_{y}.

7. Substrat (1) selon l'une des revendications précédentes, **caractérisé en ce que** ladite couche anti-reflets a un indice de réfraction inférieur à 2, notamment compris entre 1,6 et 1,9.

8. Substrat (1) selon la revendication 7, **caractérisé en ce que** la couche anti-reflets d'indice de réfraction inférieur à 2 est à base d'oxyde notamment de SiO₂ ou SiOₓC_{y}.

9. Substrat (1) selon la revendication 8, **caractérisé en ce** que la couche (3) de nitrure métallique du type TiN est surmontée d'une couche protectrice (4) à base d'oxyde métallique du type TiO₂ elle-même surmontée d'une couche anti-reflets du type SiOC.

10. Substrat (1) selon la revendication 9, **caractérisé en ce** que la somme des épaisseurs géométriques de la couche (4) protectrice et de la couche anti-reflets du type SiOC est égale à environ 50 à 75 nanomètres, dont de préférence au moins 10 nanomètres de couche protectrice du type TiO₂.

11. Substrat (1) selon l'une des revendications récédentes, **caractérisé en ce que** le substrat transparent (4) est un substrat verrier clair du type verre silico-sodo-calcique ou un substrat verrier à transmission énergétique réduite, notamment coloré.

12. Vitrage de protection solaire, notamment vitrage multiple tel qu'un double-vitrage ou vitrage monolithique, incorporant le substrat recouvert conformément à l'une des revendications précédentes, **caractérisé en ce qu'**il présente une transmission lumineuse T_{L} inférieure ou égale à 65%, et un rapport T_{L}/T_{E} entre la transmission lumineuse T_{L} et la transmission énergétique T_{E} supérieur à 1, notamment compris entre 1,2 et 1,4.

13. Vitrage de protection solaire selon la revendication 12, **caractérisé en ce qu'**il présente un facteur solaire d'au plus 0,5.

14. Procédé d'obtention du substrat muni de couches selon l'une des revendications 1 à 11, **caractérisé en ce que** la couche (4) d'oxyde métallique est déposée par une technique de pyrolyse en phase solide, liquide ou gazeuse, notamment, lorsqu'il s'agit d'oxyde de titane, par pyrolyse en phase solide de précurseurs du type acétylacétonate et/ou isopropylate et/ou alcoolate comme le tétraoctylèneglycol de titane, ou par pyrolyse en phase gazeuse à partir d'un halogénure du type TiCl₄ et d'une source d'oxygène du type H₂O, air, CO₂ ou un alcool comme l'éthanol.

15. Procédé selon la revendication 14, **caractérisé en ce que** la couche (3) de nitrure métallique est déposée par une technique de pyrolyse, notamment, lorsqu'il s'agit d'une couche de nitrure de titane, par une technique de pyrolyse en phase gazeuse de précurseurs métalliques du type halogénure de titane et de précurseurs azotés du type ammoniac et/ou amine.

16. Procédé selon l'une des revendications 14 ou 15, **caractérisé en ce que** la couche (2) en matériau diélectrique est déposée par une technique de pyrolyse, notamment quand il s'agit de SiO₂ et/ou SiOₓC_{y}, par une technique de pyrolyse en phase gazeuse de précurseurs siliciés.

17. Procédé selon l'une des revendications 14 à 16, **caractérisé en ce que** les dépôts des couches s'effectuent tous par une technique de pyrolyse, en continu sur un ruban de verre d'une ligne float.

## Claims

1. Transparent substrate (1), particularly of glass, surmounted by a metal nitride layer (3) for filtering solar radiation and whose metal is largely titanium, said metal nitride layer being surmounted by a metal oxide-based layer (4), characterized in that the metal oxide-based layer (4) protecting against high temperature oxidation the metal chosen mainly from aluminium, zirconium or titanium, in that it is surmounted with an anti-reflection layer and in that the geometrical thickness of the protective layer (4) is 10 to 30 nm and that of the anti-reflection layer between 40 and 70 nm.

2. Substrate (1) according to claim 1, characterized in that the metal nitride layer (3) has a geometrical thickness between 5 and 80 nanometres, preferably between 10 and 60 and more specifically between 15 and 35 nanometres.

3. Substrate according to one of the preceding claims, characterized in that it is provided with a dielectric material layer (2) placed between the substrate (1) and the metal nitride layer (3).

4. Substrate (1) according to claim 3, characterized in that the layer (2) is of a dielectric material with a refractive index between 1.5 and 2 and preferably between 1.6 and 1.9.

5. Substrate (1) according to claim 3 or 4, characterized in that the layer (2) has a geometrical thickness below 100 nanometres, particularly approximately 40 to 90 nanometres.

6. Substrate (1) according to claim 3 or 4, characterized in that the dielectric material layer (2) is based on SiO₂ and/or SiOₓC_{y}.

7. Substrate (1) according to one of the preceding claims, characterized in that the anti-reflection layer has a refractive index below 2, particularly between 1.6 and 1.9.

8. Substrate (1) according to claim 7, characterized in that the antireflection layer with a refractive index below 2 is based on oxide, particularly SiO₂ or SiOₓC_{y}.

9. Substrate (1) according to claim 8, characterized in that the metal nitride layer (3) of the TiN type is surmounted by a protective layer (4) based on metal oxide of the TiO₂ type, itself surmounted by an antireflection layer of the SiOC type.

10. Substrate (1) according to claim 9, characterized in that the sum of the geometrical thicknesses of the protective layer (4) and the antireflection layer of the SiOC type is equal to approximately 50 to 75 nanometres and whereof preferably at least 10 nanometres represent the protective layer of the TiO₂ type.

11. Substrate (10 according to one of the preceding claims, characterized in that the transparent substrate (4) is a clear glass substrate of the soda-lime-silica glass type or more particularly a coloured glass substrate with a reduced energy transmission.

12. Solar protection glazing, particularly multiple glazing, such as a double glazing or a monolithic glazing, incorporating the substrate covered in accordance with one of the preceding claims, characterized in that it has a light transmission T_{L} equal to or below 65%, and a ratio T_{L}/T_{E} between the light transmission T_{L} and the energy transmission T_{E} above 1 and in particular between 1.2 and 1.4.

13. Solar protection glazing according to claim 12, characterized in that it has a solar factor of at the most 0.5.

14. Process for obtaining the substrate equipped with the layers according to one of the claims 1 to 11, characterized in that the metal oxide layer (4) is deposited by solid, liquid or gas phase pyrolysis, particularly when it is of titanium oxide, by solid phase pyrolysis of precursors of the acetyl acetonate and/or isopropylate and/or alkoxide type such as titanium tetraoctylene glycol, or by gas phase pyrolysis from a halide of the TiCl₄ type and an oxygen source of the H₂O, air or CO₂ type or an alcohol such as ethanol.

15. Process according to claim 14, characterized in that the metal oxide layer (3) is deposited by a pyrolysis method, particularly in the case of a titanium nitride layer, by a gas phase pyrolysis of metal precursors of the titanium halide type and nitrogen precursors of the ammonia and/or amine type.

16. Process according to one of the claims 14 or 15, characterized in that the dielectric material layer (2) is deposited by a pyrolysis method, particularly when it is SiO₂ and/or SiOₓC_{y}, by a gas phase pyrolysis of silicon precursors.

17. Process according to one of the claims 14 to 16, characterized in that all the layers are deposited by continuous pyrolysis on a glass ribbon of a float line.

## Patentansprüche

1. Transparentes Substrat (1), insbesondere aus Glas, welches mit einer Metallnitridschicht (3) überzogen ist, welche die Sonneneinstrahlung filtern soll und deren Metall überwiegend Titan ist, wobei die Metallnitridschicht mit einer Schicht (4) auf der Basis eines Metalloxids bedeckt ist, **dadurch gekennzeichnet, daß** das Metall der vor Oxidation bei hoher Temperatur schützenden Schicht (4) auf der Basis eines Metalloxids meist aus Aluminium, Zirconium oder Titan ausgewählt ist, **daß** sie mit einer Antireflexschicht bedeckt ist, **und daß** die geometrische Dicke der Schutzschicht (4) 10 bis 30 nm und die der Antireflexschicht 40 bis 70 nm beträgt.

2. Substrat (1) nach Anspruch 1, **dadurch gekennzeichnet, daß** die geometrische Dicke der Metallnitridschicht (3) 5 bis 80 Nanometer, vorzugsweise zwischen 10 und 60 und insbesondere zwischen 15 und 35 Nanometern beträgt.

3. Substrat (1) nach einem der vorhergehenden Ansprüche, **dadurch gekennzeichnet, daß** es mit einer Schicht (2) aus einem dielektrischen Material versehen ist, die zwischen dem Substrat (1) und der Metallnitridschicht (3) angeordnet ist.

4. Substrat (1) nach Anspruch 3, **dadurch gekennzeichnet, daß** die Schicht (2) aus einem dielektrischen Material mit einem Brechungsindex von 1,5 bis 2 und vorzugsweise 1,6 bis 1,9 besteht.

5. Substrat (1) nach Anspruch 3 oder 4, **dadurch gekennzeichnet, daß** die geometrische Dicke der Schicht (2) weniger als 100 Nanometer und insbesondere etwa 40 bis 90 Nanometer beträgt.

6. Substrat (1) nach Anspruch 3 oder 4, **dadurch gekennzeichnet, daß** die Schicht (2) aus dielektrischem Material SiO₂ und/oder SiOₓC_{y} als Basis hat.

7. Substrat (1) nach einem der vorhergehenden Ansprüche, **dadurch gekennzeichnet, daß** der Brechungsindex der Antireflexschicht weniger als 2 und insbesondere 1,6 bis 1,9 beträgt.

8. Substrat (1) nach Anspruch 7, **dadurch gekennzeichnet, daß** die Antireflexschicht mit einem Brechungsindex von kleiner als 2 ein Oxid und insbesondere SiO₂ oder SiOₓC_{y} als Basis hat.

9. Substrat (1) nach Anspruch 8, **dadurch gekennzeichnet, daß** die Metallnitridschicht (3) vom Typ TiN mit einer Schutzschicht (4) auf der Basis eines Metalloxids vom Typ TiO₂ bedeckt ist, die ihrerseits mit einer Antireflexschicht vom Typ SiOC überzogen ist.

10. Substrat (1) nach Anspruch 9, **dadurch gekennzeichnet, daß** die Summe der geometrischen Dicken von Schutzschicht (4) und Antireflexschicht vom Typ SiOC gleich etwa 50 bis 75 Nanometer ist, davon vorzugsweise mindestens 10 Nanometer für die Schutzschicht vom Typ TiO₂.

11. Substrat (1) nach einem der vorhergehenden Ansprüche, **dadurch gekennzeichnet, daß** das transparente Substrat (4) ein Klarglassubstrat vom Typ Kalk-Natron-Silicatglas oder ein insbesondere eingefärbtes Glassubstrat mit verringertem Strahlungstransmissionsgrad ist.

12. Sonnenschutzverglasung, insbesondere eine Mehrfachverglasung wie eine Doppelverglasung oder eine monolithische Verglasung, in welcher das gemäß einem der vorhergehenden Ansprüche beschichtete Substrat enthalten ist, **dadurch gekennzeichnet, daß** sie einen Lichttransmissionsgrad T_{L} von kleiner oder gleich 65 % und ein T_{L}/T_{E}-Verhältnis von Lichttransmissionsgrad T_{L} zu Strahlungstransmissionsgrad T_{E} von größer als 1 und insbesondere von 1,2 bis 1,4 aufweist.

13. Sonnenschutzverglasung nach Anspruch 12, **dadurch gekennzeichnet, daß** sie einen Gesamtenergiedurchlaßgrad von höchstens 0,5 aufweist.

14. Verfahren zur Herstellung des mit Schichten gemäß einem der Ansprüche 1 bis 11 versehenen Substrats, **dadurch gekennzeichnet, daß** die Metalloxidschicht (4) durch ein Verfahren zur Pyrolyse aus der festen, flüssigen oder gasförmigen Phase, insbesondere, wenn es sich um Titanoxid handelt, durch Pyrolyse von Vorläufern vom Typ Titanacetylacetonat und/oder -isopropylat und/oder -alkoholat wie Titantetraoctylenglykol aus der Festphase oder durch Gasphasenpyrolyse ausgehend von einem Halogenid vom Typ TiCl₄ und einer Sauerstoffquelle vom Typ H₂O, Luft, CO₂ oder eines Alkohols wie Ethanol aufgebracht wird.

15. Verfahren nach Anspruch 14, **dadurch gekennzeichnet, daß** die Metallnitridschicht (3) durch ein Pyrolyseverfahren, insbesondere, wenn es sich um eine Titannitridschicht handelt, durch ein Verfahren zur Pyrolyse von metallischen Vorläufern vom Typ Titanhalogenid und von stickstoffhaltigen Vorläufern vom Typ Ammoniak und/oder Amin aus der Gasphase aufgebracht wird.

16. Verfahren nach Anspruch 14 oder 15, **dadurch gekennzeichnet, daß** die Schicht (2) aus dielektrischem Material durch ein Pyrolyseverfahren, insbesondere, wenn es sich um SiO₂ und/oder SiOₓC_{y} handelt, durch ein Verfahren zur Pyrolyse siliciumhaltiger Vorläufer aus der Gasphase aufgebracht wird.

17. Verfahren nach einem der Ansprüche 14 bis 16, **dadurch gekennzeichnet, daß** die Vorgänge zum Aufbringen der Schichten alle durch ein Pyrolyseverfahren kontinuierlich auf einem Glasband einer Floatglaslinie erfolgen.
